# EUROPÄISCHE PATENTSCHRIFT

(11) **EP 0 606 312 B1**
(45) Veröffentlichungstag und Bekanntmachung des Hinweises auf die Patenterteilung: **09.09.1998**
(21) Anmeldenummer: 92920482.4
(22) Anmeldetag: 02.10.1992
(51) Int. Cl.: H04N 1/40

(54) **VERFAHREN UND ANORDNUNG ZUR ERZEUGUNG VON RASTERWINKELN IN DER DIGITALEN DRUCKTECHNIK**
PROCESS AND ARRANGEMENT FOR PRODUCING SCREEN ANGLES IN DIGITAL PRINTING
PROCEDE ET DISPOSITIF POUR LA PRODUCTION D'ANGLES DE TRAME EN TECHNIQUE NUMERIQUE D'IMPRESSION

(30) Priorität: 02.10.1991 EP 91116873
(43) Veröffentlichungstag der Anmeldung: 20.07.1994
(73) Patentinhaber: Océ Printing Systems GmbH, 85586 Poing (DE)
(72) Erfinder: GOLDMANN, Gerd, D-81739 München (DE)
(74) Vertreter: Schaumburg, Thoenes & Thurn
(86) Internationale Anmeldenummer: EP9202287
(87) Internationale Veröffentlichungsnummer: WO9307709

(56) Entgegenhaltungen:
- EP-A- 0 141 869
- EP-A- 0 293 214
- EP-A- 0 332 468
- WO-A-91/02426
- DE-A- 3 320 691
- US-A- 4 533 941
- US-A- 4 924 301

## Beschreibung

Die Erfindung bezieht sich auf ein Verfahren und Anordnung zur Erzeugung von Rasterwinkeln in der digitalen Drucktechnik.

Halbtonverfahren sind in der Drucktechnik bekannte Methoden, die Ausgabe von schattierten Bildflächen über die Größe der wiederzugebenden Bildpixel zu steuern. Große Pixel erzeugen dabei dunklere Bereiche, während kleine Pixel hellere Bereiche ergeben. Die Auflösung eines Bildes bestimmt sich entweder nach der Anzahl der Pixel je Zoll oder, wenn die Pixel in Bildzeilen zusammengefaßt werden, durch die Zahl der verwendeten Bildzeilen je Zoll. Letztere Angabe wird als Screen-Frequency bezeichnet und in lines per inch (lpi) gemessen.

Das Halbtonverfahren, ursprünglich in der analogen Drucktechnik angewandt, ist auch in modifizierter Form in der digitalen Drucktechnik, z. B. in Druckeinrichtungen wie Tinten-, Matrix- und Laserdruckern sowie in Laserbelichtern, zur Ausgabe von monochromen sowie kolorierten Bildflächen anwendbar.

Im Gegensatz zum herkömmlichen Halbtonverfahren in der analogen Drucktechnik, wo die Größe eines Bildpunktes variiert werden kann, können in der digitalen Drucktechnik nur Bildpunkte konstanter Größe sogenannte "Dots" gedruckt werden. Die mit solchen digitalen Ausgabegeräten erreichbare Auflösung wird deshalb auch in dpi (dots per inch) angegeben. Da ein digitales Ausgabegerät die Größe der Dots nicht variieren kann und somit auch kein echtes Halbtonverfahren vorliegt, ist man gezwungen, das Halbtonverfahren nachzubilden. Bei diesem Pseudo-Halbtonverfahren werden Gruppen von Dots zu größeren Dots zusammengefaßt. Die Geometrie dieser Gruppen von Dots ergibt, über eine größere Fläche betrachtet, wieder das von dem echten Halbtonverfahren aus der analogen Drucktechnik bekannte typische Linienmuster. Aus der Dicke dieser Linien läßt sich dann wieder die Auflösung eines Bildes in lpi (lines per inch) angeben.

Das herkömmliche, in der analogen Drucktechnik angewandte Halbtonverfahren ist für die Digitaldrucktechnik in der Nachbildung noch aufwendiger, wenn schattierte Farbflächen und feinste Unterschiede in der Farbnuancierung (verschiedene Grauwerte) gedruckt werden sollen. Unter dem Grauwert einer Farbe versteht man die Intensität einer Farbe, z. B. erscheint ein Rot mit niedrigerem Grauwert als blasses Rosa, ein Rot mit höherem Grauwert als volle, satte Farbe.

Bei Farbbildern hat jede subtraktive Grundfarbe (Cyan, Magenta und Gelb) ein eigenes Grundmuster für die Anordnung der Bildpunkte. Der Begriff subtraktive Grundfarbe bedeutet dabei, daß, wenn weißes Licht (Mischung aus den additiven Grundfarben Rot, Grün und Blau (RGB-Farben)) auf der subtraktiven Grundfarbe reflektiert wird, jede dieser subtraktiven Grundfarbe mindestens eine der additiven Grundfarben absorbiert.

Ein vollständiges Bild entsteht, wenn die subtraktiven Grundfarben und zusätzlich die Farbe Schwarz sukzessive (nach dem Überlagerungsprinzip) gedruckt werden. Die subtraktiven Grundfarben (Cyan, Magenta und Gelb sowie die Farbe Schwarz) werden im folgenden als Grundfarben (C, M, Y, K) für Cyan, Magenta, Gelb und Schwarz bezeichnet. Das Drucken der Farbe Schwarz ist deshalb notwendig, weil aufgrund von Farbunreinheiten der subtraktiven Grundfarben bei der additiven Mischung dieser drei subtraktiven Grundfarben kein reiner Schwarzton entsteht.

Beim herkömmlichen Halbtonverfahren in der analogen Drucktechnik wird für jede der Grundfarben C, M, Y, K ein sogenannter Rasterwinkel verwendet. Als Rasterwinkel wird der Winkel bezeichnet, mit dem die Bildzeilen der Grundfarbe C, M, Y, K gegenüber der Horizontalen gedreht sind. Sowohl in der analogen als auch digitalen Drucktechnik verwendete Rasterwinkel für die einzelnen Grundfarben C, M, Y, K sind beispielsweise Rasterwinkel von 0° bzw. 90°, 15°, 45°, 75° in der genannten Reihenfolge für die Farben Gelb, Magenta, Schwarz und Cyan. Der Rasterwinkel von 90° für die Farbe Gelb bedeutet lediglich eine Drehung des Rasters um 90° gegenüber dem 0°-Raster, ohne daß sich irgendetwas für das zu erstellende Druckbild ändert.

Für die Verwendung dieser Rasterwinkel gibt es vor allem zwei Gründe:

Zum einen würden ohne eines Rasterwinkels bei den, z. B. mit Druckplatten in der analogen Drucktechnik, zu druckenden Grundfarben selbst bei kleinsten Adjustierungsfehlern der Druckplatten sogenannte Moiré-Effekte entstehen. Aufgrund dieser Moiré-Effekte entstehen im Schnittbereich der vier Grundfarben C, M, Y, K den Gesamteindruck des Bildes störende Interferenzmuster.

Zum anderen sind die in der analogen Drucktechnik verwendeten Grundfarben C, M, Y, K aus Kostengründen nicht wirklich transparent, so daß die Bildpixel der einzelnen Grundfarben C, M, Y, K gegeneinander versetzt werden müssen, um Fehlfarben durch weitgehende Farbüberlappungen zu vermeiden.

Beide Gründe sind sowohl für den analogen als auch den digitalen Farbdruck maßgebend. Beim digitalen Farbdruck kommt jedoch erschwerend hinzu, daß digitale Ausgabegeräte das Halbtonverfahren nachbilden müssen, indem sie Gruppen von Dots zu größeren Dots zusammenfassen. Dies geschieht beispielsweise dadurch, daß Basis- oder Halbtonzellen gebildet werden. Die Basis- oder Halbtonzelle ist dabei z. B. eine quadratische Matrix von Dots und entspricht in ihrer Größe etwa den Bildpunkten beim herkömmlichen analogen Druckverfahren. Bei der quadratischen Matrix handelt es sich um eine nach der dem Fachmann bekannter Dither-Methode erzeugten Dither-Matrix. So ist die Dither-Methode beispielswiese in den Druckschriften "Digital Halftoning" von R. Ulichney, MIT, 1987 und "Digital Halftoning for Monochrome and Color Printing", a Tutorial presented on the 20. of March 1988 at SPSE's 4th International Congress on Advances in Non-Impact Printing Technologies, New Orleans, Lousiana by Mr. G. Thompson and Mr. G. Goetzel beschrieben.

Die Zahl der darstellbaren Farbabstufungen mit einer solchen Halbtonzelle ist identisch mit der Anzahl der Zellenelemente plus eine zusätzliche Farbabstufung (Farbton Weiß), wenn kein Zellenelement gesetzt ist. Wie gut die Nachbildung des Halbtonverfahrens beim digitalen Farbdruck gelingt, hängt im wesentlichen von vier Parametern ab:
(i) der Größe des Dots,
(ii) der Größe der Halbtonzelle,
(iii) des Füllungsgrades der Halbtonzelle,
(iv) des Rasterwinkels.

Um z. B. eine 100 lpi (lines per inch) Bildauflösung zu erzielen, benötigt man bei einem 300-dpi-Drucker oder Kopierer eine 3x3-Halbtonzelle mit neun Zellenelementen. Der Füllungsgrad dieser Halbtonzelle gibt an, wieviel Zellenelemente (Dots) gesetzt sind. Sind beispielsweise drei Zellenelemente in der 3x3-Halbtonzelle gesetzt, so entspricht dieses einem Füllungsgrad von 33,3%. Werden diese Halbtonzellen über größere Flächen zeilen- und spaltenweise aneinander gereiht, so erscheinen sie als Zeilen, wobei der Rasterwinkel den Winkel dieser Zeilen zur Horizontalen bzw. Vertikalen angibt.

Entscheidend für die Gestaltung der Halbtonzellen ist der Verwendungszweck. Will man beispielsweise eine Farbseparation durchführen, so muß man darauf achten, daß der Rasterwinkel und die Rasterfüllung der Halbtonzelle dahingehend optimiert werden, daß möglichst keine Moiré-Muster entstehen. Moiré-Muster entstehen wie bereits erwähnt aufgrund kleinster mechanischer Adjustierungsfehler beim Überlagerungsdruck. Im Fall eines 300-dpi-Druckers oder Kopierers, bei dem die Größe des Druckelementes (printing element = pel) 85 µm beträgt, treten solche mechanischen Adjustierungsfehler häufig auf.

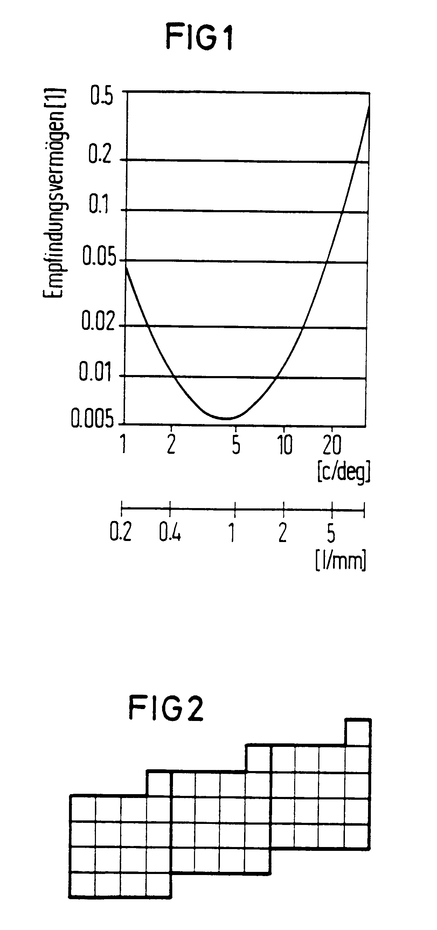

Will man weiterhin einen Farbausdruck, z. B. mit einem Thermotransferdrucker, erstellen, so muß die Halbtonzelle zusätzlich so gestaltet werden, daß möglichst saubere und satte Farben entstehen. Hierfür ist es vorteilhaft, wenn die Anzahl der Zellenelemente möglichst klein ist, da dadurch die Bildauflösung verbessert wird. Die Forderung nach einer guten Bildauflösung läßt sich jedoch nicht immer mit dem Bestreben, möglichst viele Farbabstufungen zu realisieren, in Einklang bringen. Anhand des in Figur 1 dargestellten empirisch, aus einem Betrachtungsabstand von 3 m für das menschliche Auge ermittelten Detektionsgrenzverlaufs für sinusförmige Raster, nach der das menschliche Auge sein maximales räumliches Empfindungsvermögen zwischen 2 und 10 c/deg (cycles per degree) bzw. 0,4 und 2 l/mm (lines per millimeter) aufweist, sollte die Bildauflösung nicht kleiner als 17 c/deg bzw. 4 l/mm sein. Dieses entspricht einer Bildauflösung von ca. 100 Pixel bzw. lines per inch. Im Fall des 300-dpi-Druckers oder Kopierers läßt sich dieser Wert mit einer 3x3 Halbtonzelle erreichen. Die sich dadurch ergebenden zehn Farbabstufungen sind die Minimalzahl für einen einigermaßen akzeptablen Farbausdruck.

In der digitalen Drucktechnik bieten viele der bekannten Grafik- und Desk Top Publishing (DTP)-Programme die Möglichkeit an, die Werte für die Screen-Frequency und die Rasterwinkel der Grundfarben zur Vermeidung von Moiré-Mustern unmittelbar anzugeben. Die optimale Einstellung hängt dabei von dem jeweils verwendeten digitalen Ausgabegerät ab. Viele der heute auf dem Markt vertretenen Farbdrucker benutzen hierfür den Standard-Postscript-Interpreter von Adobe. Dieser legt eine 6x6-Halbtonzelle fest, was bei einer Druckerauflösung von 300 dpi gleichbedeutet ist mit einer Bildauflösung von 50 lpi. Die größere Anzahl von realisierbaren Farbabstufungen wird dabei mit einer verringerten Bildauflösung erkauft. Die verringerte Bildauflösung wirkt sich dabei nachteilig auf die Qualität des gedruckten Bildes aus. Der Postscript-Interpreter ist darüber hinaus so ausgelegt, daß er eine große Anzahl von verschiedenen digitalen Ausgabegeräten von monochromen Druckern bis hin zu hoch auflösenden Laserbelichtern unterstützt. Der Postscript-Interpreter benutzt dabei an die gebräuchlichen Rasterwinkel des Halbtonverfahrens angelehnte Farbwinkel, sogenannte Default-Winkel.

Eine andere Möglichkeit, Moiré-Muster aufgrund kleinster Adjustierungsabweichungen zu vermeiden, besteht darin, die Mechanik eines digitalen Ausgabegerätes für eine extrem genaue Adjustierung des in dem Gerät zu bedruckenden Aufzeichnungsträgers auszulegen.

Aus der WO 90/05423 ist weiterhin eine Vorrichtung und ein Verfahren bekannt, mit der bzw. mit dem schattierte Farbflächen sowie feinste Unterschiede in der Farbnuancierung nach der Halbtonmethode gedruckt werden. Um dabei auftretende Moiré-Muster zu vermeiden, wird für jeden Farbausdruck ein Rasterwinkel eingeführt. Zur Erzeugung dieser Rasterwinkel werden nach der Dither-Methode erzeugte Dither-Matrizen in bezug auf deren Koordinaten durch eine 3x3-Tranformationsmatrix gedreht. Die Dither-Matrix ist z. B. eine "16x16" Matrix, die in vier "8x8" Matrizen aufteilbar ist. Für die Koordinatenrotation der Dither-Matrix ist ein so großer Rechenaufwand erforderlich, daß dieser z. B. bei einer Vorgabe, in der Minute 20 Seiten (DIN A4) bei maximal 80 Farbausdrucke für einen Vierfarbendrucker zu bedrucken, selbst mit dem schnellsten, zur Zeit zur Verfügung stehenden Mikroprozessoren zeitlich nicht bewältigt werden kann.

Aus der EP 0 332 468 A2 ist ein Abbildungsgerät bekannt, bei dem zur Erzeugung von Rasterwinkeln gemäß der Formel θ = tan⁻¹ b/a der Wert "a" durch den Zahlerstand einer Zähleinrichtung und der Wert "b" durch die Zahl folge bestimmt wird. Dazu ist eine Basiszelle mit z. B. 13 Zellenelementen und einer unterschiedlichen Zellenstruktur für die jeweilige abzubildende Farbe periodisch in einem Grafikformat unter einen für die jeweilige Farbe bestimmten Rasterwinkel angeordnet.

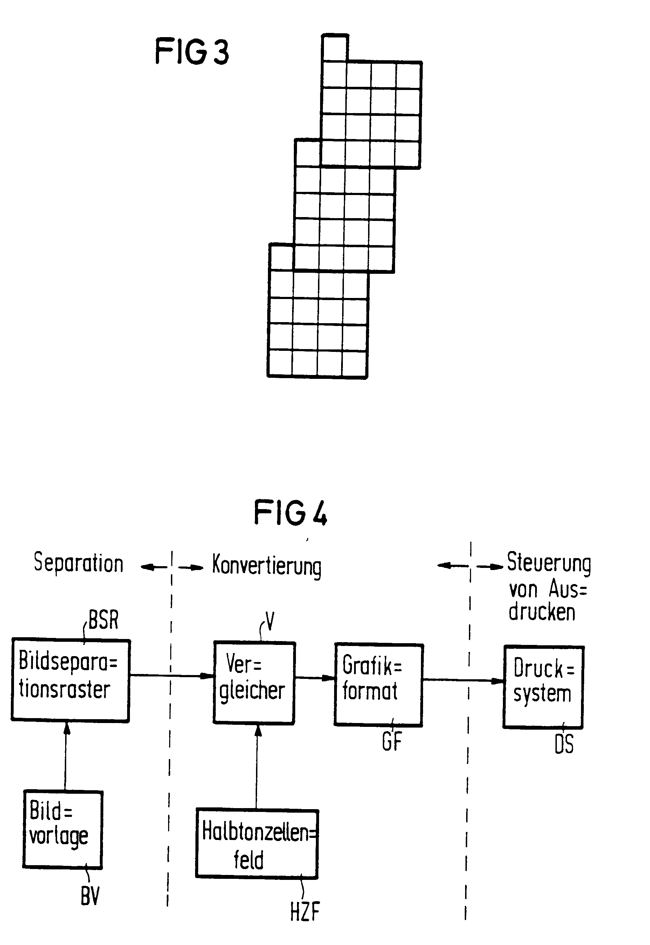

Aus der Druckschrift "Digital Halftoning for Monochrome and Color Printing" a Tutorial by Mr. G. Thompson und Mr. G. Goetzel ist eine weitere Methode beschrieben, wie ein aus mehreren Halbtonzellen gebildetes Raster den für den jeweiligen Farbausdruck bestimmten Rasterwinkel aufweist. Jede dieser in dem Raster periodisch angeordnete Halbtonzelle weist eine auf den zu realisierenden Rasterwinkel ausgerichtete äußere Form auf. Charakteristisch für die äußere Form ist eine 3x3-Basiszelle, an dessen rechten bzw. linken Zelleneckelement ein weiteres zehntes Zellenelement hinzugefügt ist. Für die Anordnung in dem Raster ist die soeben beschriebene Halbtonzelle gegenüber der benachbarten Halbtonzelle jeweils um ein Zellenelement ("pel") nach oben bzw. rechts verschoben. Dadurch entstehen dann die in Figur 2 und 3 für die Farben Magenta und Cyan dargestellten Halbtonzellenanordnungen. Für die Farbe Magenta in Figur 2 ergibt sich somit ein gegen die Horizontale geneigter Rasterwinkel von 14° und für die Farbe Cyan in Figur 3 ein Rasterwinkel von 76°. Die so erzeugen Rasterwinkel entsprechen in etwa bereits den aus der analogen Drucktechnik für die Farben Magenta und Cyan verwendeten Rasterwinkel (15° und 75°).

Aufgabe der Erfindung ist es, ein Verfahren und Anordnung zur Erzeugung von Rasterwinkeln in der digitalen Drucktechnik anzugeben, mit dem für akzeptable Bildauflösungen und einer maximalen Anzahl von realisierbaren Farbabstufungen die Entstehung von visuell störenden Texturen in der digitalen Drucktechnik, insbesondere bei niedriger Druckerauflösung, auf einfache Weise und ohne großen Rechenaufwand vermieden wird.

Diese Aufgabe wird durch die im Patentanspruch 1 angegebenen Merkmale gelöst.

Durch das erfindungsgemäße Verfahren werden bei der digitalen Drucktechnik, insbesondere dem digitalen Farbdruck, auf einfache Weise Rasterwinkel erzeugt, ohne daß sich der Druckdurchsatz (Anzahl der bedruckten Aufzeichnungsträger pro Minute) verringert und die Druckbildqualität abnimmt. Mit dem erfindungsgemäßen Verfahren lassen sich somit große Druckdurchsätze (z. B. 20 Seiten pro Minute) realisieren. Das Verfahren bietet darüber hinaus den Vorteil, daß für die Modulo-Rechnung kein zusätzlicher softwaremäßiger Aufwand für die Programmierung einer die Konvertierung von digital codierten, separierten Halbtonwerten durchführenden Zentraleinheit (Mikroprozessor) notwendig ist. Die Modulo-Rechenvorschrift ist in vielen bekannten Mikroprozessoren implementiert.

Vorteilhafte Weiterbildungen der Erfindung sind in den Unteransprüchen angegeben.

Ein Ausführungsbeispiel der Erfindung ist anhand der Zeichnungen von Figur 4 bis Figur 10 erläutert. Es zeigen:
Figur 4 in Blockbilddarstellung ein in der digitalen Drucktechnik verwendetes Ablaufschema z. B. zur Erstellung eines Farbausdrucks aufgrund einer farbigen Bildvorlage,
Figur 5 zeigt eine Hardwarestruktur einer Druckeinrichtung mit einem Mikrocomputersystem für das in Figur 4 dargestellte Ablaufschema,
Figur 6 von links nach rechts ein durch Vektoren n, m aufgespanntes Bildseparationsraster, ein durch die Vektoren n, m aufgespanntes Halbtonzellenfeld mit einer periodisch angeordneten 3x3-Haltonzelle und eine durch die Vektoren n, m aufgespanntes Grafikformat (Bit map),
Figur 7 ein durch zwei 3x3-Halbtonzellen gebildeter quadratischer Halbtonzellenblock mit einer Blocklänge i, j von i, j = 6 pel für einen gelben Farbausdruck,
Figur 8 ein durch zwei Halbtonzellen mit jeweils zehn Zellenelementen gebildeter rechteckförmiger Halbtonzellenblock mit einer Blocklänge i, j von i = 10 pel und j = 30 pel für einen Magenta-Farbausdruck,
Figur 9 ein durch zwei Halbtonzellen mit jeweils zehn Zellenelementen gebildeter, rechteckförmiger Halbtonzellenblock mit einer Blocklänge i, j von i = 30 pel und j = 10 pel für einen Cyan-Farbausdruck,
Figur 10 ein durch zwei sternförmig ausgebildete Halbtonzellen mit jeweils 13 Zellenelementen gebildeter quadratischer Halbtonzellenblock mit einer Blocklänge i, j von i, j = 26 pel für einen schwarzen Farbausdruck.

Figur 4 zeigt in einem Blockdiagramm ein in der digitalen Drucktechnik, beispielsweise für die Erstellung eines Farbausdruckes (Farbauszuges) aufgrund einer farbigen Bildvorlage, verwendetes Ablaufschema. Das Ablaufschema setzt sich dabei in seiner zeitlichen Abfolge aus drei Phasen, der Separation, Konvertierung und Steuerung von Ausdrucken, zusammen. Wenn im folgenden von Ausdrucken die Rede ist, so sind damit in erster Linie Farbausdrucke in Gelb Y, Magenta M, Cyan C und Schwarz K gemeint. Alternativ ist es aber auch möglich, statt Farbausdrucke einen reinen Schwarzausdruck auf weißem Papier, sogenannte Schwarz-Weiß-Ausdrucke, zu erstellen. Das dargestellte Ablaufschema ist nicht nur in der digitalen Drucktechnik, wie z. B. mit Tinten-, Thermotransfer- und elektrofotografischen Druckern, sondern auch in der Kombination Laserbelichter und analoge Drucktechnik anwendbar.

Der dargestellte Ablauf beginnt zunächst damit, daß Farbpixel einer Bildvorlage BV nach den Grundfarben Y, M, C, K (Gelb, Magenta, Cyan und Schwarz) in digital codierte Halbtonwerte separiert und in einem Bildseparationsraster BSR eingetragen werden. Dieser als Farbseparation bezeichnete Vorgang ist dem Fachmann z. B. aufgrund der Druckschrift "Digital Halftoning for Monochrome and Color Printing" und der WO 90/05423 bekannt.

Bei der sich daran anschließenden Konvertierung der separierten, digital codierten Halbtonwerte wird jeder einzelne Halbtonwert in einem Vergleicher V mit einem Schwellenwert verglichen. Für diesen als Pseudo-Halbtonverfahren bezeichneten Vergleich werden die vorgegebenen Schwellenwerte in einem Halbtonzellenfeld HZF (z. B. einem Dither-Halbtonzellenfeld) angeordnet. Das Ergebnis des Vergleiches wird anschließend in einem Grafikformat GF abgespeichert. Da es sich bei dem Grafikformat GF um ein zweiwertiges Zustandsarray handelt, wird das Grafikformat GF gewöhnlich auch als "Bilevel-Bitmap" bezeichnet. Für den jeweiligen Farbausdruck (Farbauszug) werden die in dem Grafikformat GF eingetragenen Zustandswerte an ein Drucksystem DS übertragen.

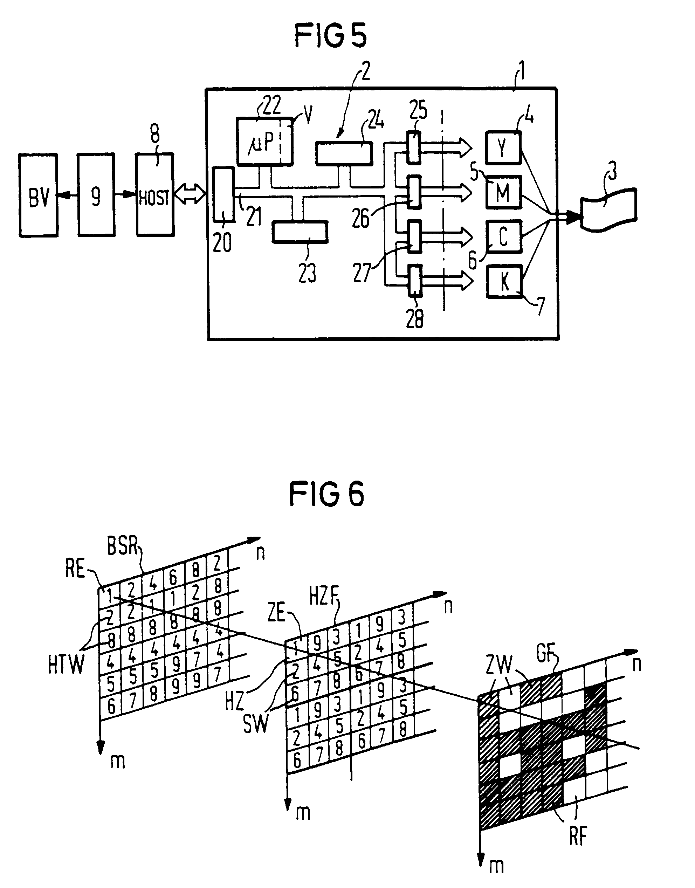

Figur 5 zeigt eine Hardwarestruktur einer Druckeinrichtung 1 mit einem Mikrocomputersystem 2, das die in Figur 4 dargestellte Konvertierung und Steuerung von Ausdrucken durchführt. Die Druckeinrichtung 1 kann in beliebiger Weise als Thermotransfer-, Tinten-und elektrofotografische Druckeinrichtung ausgebildet sein. Darüber hinaus ist die Druckeinrichtung 1 beispielsweise als Single-Paß-Drucker ausgelegt. Bei einem solchen Druckertyp wird im Unterschied zum Multi-Paß-Drucker ein zu bedruckender Aufzeichnungsträger 3 für die einzelnen Farbausdrucke nacheinander an mehreren Druckmodulen 4 ... 7 des Drucksystems vorbeigeführt. Damit ist aber auch die Gefahr größer, daß Passerfehler auftreten. Diese Passerfehler sind dann die Ursache für die eingangs erwähnten Moiré-Muster.

Für die Konvertierung der bei der Farbseparation digital codierten, separierten Halbtonwerte ist das Mikrocomputersystem 2 der Druckeinrichtung 1 mit einer Bildverarbeitungseinrichtung 8 verbunden (Doppelpfeil in Figur 5). Die Bildverarbeitungseinrichtung 8 ist im Ausführungsbeispiel als Großrechner (Host) ausgebildet, der nicht zur Druckeinrichtung 1 gehört. Alternativ zum Großrechner kann als Bildverarbeitungseinrichtung 8 aber auch ein Personal Computer (PC) eingesetzt werden, der dann entweder, wie der Großrechner, von der Druckeinrichtung 1 getrennt ist oder in der Druckeinrichtung 1 integriert ist. Die Farbseparation beginnt in bekannter Weise damit, daß z. B. von einem Scanner 9 die Bildvorlage BV abgetastet wird, und die abgetasteten Farbpixel in die digital codierten, die Farbintensitäten der Farbpixel enthaltende Halbtonwerte separiert werden. Alternativ zur Bildübergabe durch den Scanner 9 ist es auch möglich, eine Bilddaten enthaltene Postscript-Datei an die Bildverarbeitungseinrichtung 8 (Host, PC) zu übergeben. Anschließend werden die farbseparierten Halbtonwerte in den Großrechner 8 als Rasterwerke in das Bildseparationsraster BSR (Figur 4) eingetragen.

Danach werden die farbseparierten Halbtonwerte der Bildvorlage BV von dem Großrechner 8 aus dem Bildseparationsraster BSR sequentiell an das Mikrocomputersystem 2 übergeben. Das Mikrocomputersystem 2 weist dazu ein SCSI-Schnittstellenmodul 20 (SCSI = Small Computer Systems Interface) auf, das über einen gemeinsamen Bus 21 für einen Mikroprozessor 22, einem Arbeitsspeicher 23 (RAM), einem Massenspeicher 24, z. B. einem Festplattenspeicher, und vier dem Fachmann bekannte FIFO-Module 25 ... 28 (FIFO = First In First Out) mit diesen verbunden ist. In dem Arbeitsspeicher 23 des Mikrocomputersystems 2 sind die Halbtonzellenfelder HZF mit den Schwellenwerten für die verschiedenen Farbausdrucke der Grundfarben Y, M, C, K gespeichert. Mit der Übergabe der separierten Halbtonwerte von dem Großrechner 8 über das Schnittstellenmodul 20 an den Mikroprozessor 22 greift dieser für die Konvertierung der separierten Halbtonwerte auf die in dem Arbeitsspeicher 23 gespeicherten Halbtonzellenfelder HZF mit deren Schwellenwerten zu. Um den bei der Beschreibung der Figur 4 angesprochenen Vergleich durchführen zu können, ist der Vergleicher V dem Mikroprozessors 22 zugeordnet. Der Vergleicher V kann dabei z. B. separat als Hardware-Baustein oder als Programm (Software) im Mikroprozessor 22 enthalten sein. Wird dem Mikroprozessor 22 über das Schnittstellenmodul 20 ein Halbtonwert übergeben, so wird dieser unmittelbar nach dem Zugriff des Mikroprozessors 22 auf den Arbeitsspeicher 23 in dem Vergleicher V mit dem aus dem Arbeitsspeicher 23 ausgelesenen Schwellenwert verglichen. Das Vergleichsergebnis wird anschließend von dem Mikroprozessor 22 in dem Massenspeicher 24 in dem Grafikformat GF zwischengespeichert. In dem Massenspeicher 24 sind sämtliche Grafikformate GF für die Farbausdrucke der Grundfarben Y, M, C, K eingerichtet. Durch gezielt gesteuerte Zuqriffe des Mikroprozessors 22 auf den Massenspeicher 24 können die in den einzelnen Grafikformaten GF zwischengespeicherten Zustandswerte anschließend über die FIFO-Module 25 ... 28, in der Reihenfolge wie sie abgespeichert worden sind, sequentiell an die Druckmodule 4 ... 7 für die Grundfarben Y, M, C, K ausgegeben werden. Über die Druckmodule 4 ... 7 werden die Farbauszüge der Grundfarben Y, M, C, K entsprechend der Bildvorlage BV auf den Aufzeichnungsträger 3 sukzessiv gedruckt, indem die Zustandswerte (Bilevel-Bilder) in den Grafikformaten GF (Bitmap's) auf den Aufzeichnungsträger 3 überlagert werden (Überlagerungsdruck).

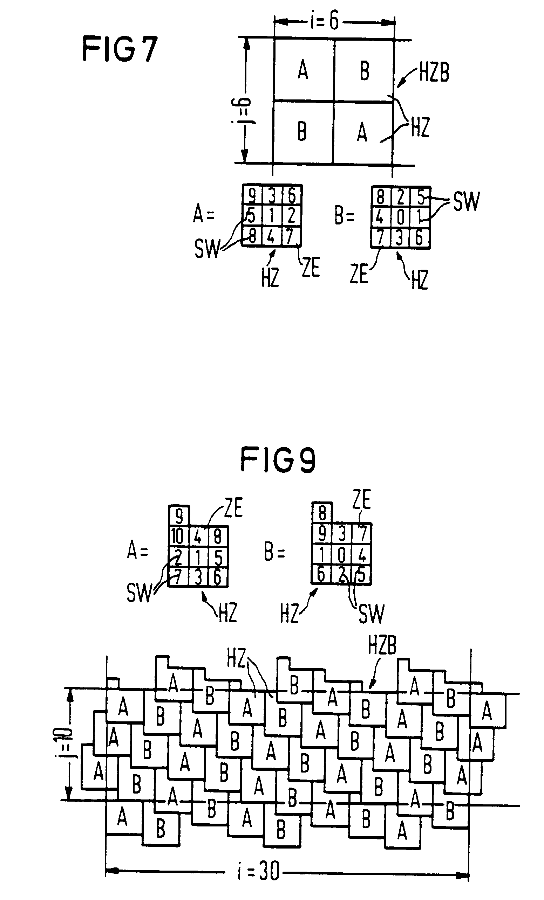

Damit die Farbpixel der Bildvorlage BV auf dem Aufzeichnungsträger 3 ohne Moiré-Muster ausgedruckt werden, müssen die einzelnen Farbausdrucke mit einem jeweils unterschiedlichen Rasterwinkel auf den Aufzeichnungsträger 3 gebracht werden. Wie diese Rasterwinkel für die einzelnen Farbausdrucke erzeugt werden, wird in den Figuren 7 bis 10 beschrieben.

Figur 6 zeigt anhand einer räumlichen Anordnung des Bildseparationsrasters BSR, des Halbtonzellenfeldes HZF und des Grafikformates GF z. B. für die Grundfarbe Y (Gelb), stellvertretend für alle anderen Grundfarben, nach welchem Kriterium die Zustandswerte ZW in dem Grafikformat GF erzeugt werden. Das Bildseparationsraster BSR ist dabei eine durch zwei Vektoren n, m (Rasterkoordinaten) aufgespannte Rasterebene mit Rasterelementen RE, wobei in dem jedem Rasterelement RE ein separierter Halbtonwert HTW zugeordnet ist. Welchen absoluten Betrag der jeweilige Halbtonwert HTW in dem Bildseparationsraster BSR annehmen kann, hängt jeweils davon ab, wieviel Farbabstufungen digital gedruckt werden können. Dieses ist wiederum, wie bereits eingangs erwähnt, davon abhängig, wieviele Zellenelemente eine in dem Halbtonzellenfeld HZF periodisch angeordnete Halbtonzelle aufweist.

Im vorliegenden Fall ist das ebenfalls durch die Vektoren n, m aufgespannte Halbtonzellenfeld HZF mit einer 3x3-Halbtonzelle HZ mit neun Zellenelementen ZE periodisch aufgebaut. Die Zellenelemente ZE sind mit den bei der Beschreibung der Figur 4 erwähnten vorgegebenen Schwellenwerten SW besetzt. Die Schwellenwerte SW sind z. B. Dezimalzahlen von 1 bis 9, deren Anzahl gerade der Anzahl der Zellenelemente ZE der Halbtonzelle HZ entspricht. Alternativ zu den Dezimalzahlen können aber auch andere in dem Vergleicher V nach Figur 4 und 5 als Vergleichsgröße zu den Halbtonwerten HTW in dem Bildseparationsraster BSR verwendet werden. Die Besetzung der Zellenelemente ZE mit vorgegebenen Schwellenwerten SW wird als Füllung der Halbtonzelle HZ bezeichnet. Die Füllung einer Halbtonzelle HZ unterscheidet sich durch die Anordnung der Schwellenwerte SW in der Halbtonzelle HZ.

Nach der Druckschrift "A New Evaluation Method of Image Quality of Digital Halftone Images obtained by ordered Dither Message", Journal of Imaging Technology, Vol. 10, No. 5, 1984, Seite 181 erzeugen beispielsweise "Halbton-", "Schrauben-" oder "Block-"Füllungen im Farbausdruck störende Farbmuster. Andere Füllungen, wie die "Bayer-Füllung", sind hierfür wegen ihrer höheren Ortsfrequenz besser geeignet. Für Druckeinrichtungen, insbesondere Thermotransferdrucker, ist eine solche "Bayer-Halbtonzelle" wegen ihrer großen Anzahl von einzelnen Zellenelementen ZE (pels) schwer zu drucken. In den Figuren 7 bis 10 sind in den jeweiligen Halbtonzellen A, B jeweils verschiedene Anordnungen von Schwellenwerten in den Halbtonzellen dargestellt. Die dort dargestellten Anordnungen geben einen homogenen Farbeindruck und können zudem in Druckeinrichtungen, insbesondere einem Thermotransferdrucker, gut gedruckt werden.

Die in Figur 6 dargestellte Anordnung der Schwellenwerte in der 3x3-Halbtonzelle HZ ist willkürlich gewählt, um beispielsweise den in Figur 4 und 5 angesprochenen Vergleich zwischen den Halbtonwerten HTW und den Schwellenwerten SW zeigen zu können. Für die Durchführung des Vergleichs, wie dieser in dem Vergleicher V in Figur 4 und 5 abgeläuft, wird für jeden durch die Vektoren n, m festgelegten Halbtonwert HTW in dem Bildseparationsraster BSR und dem entsprechenden Schwellenwert SW in dem Halbtonzellenfeld HZF untersucht, welcher von den beiden Werten größer ist. Ist der Halbtonwert HTW in dem Bildseparationsraster BSR größer oder gleich dem Schwellenwert SW in dem Halbtonzellenfeld HZF, so wird diesem Zustand der Bitwert "1" und ansonsten der Bitwert "0" zugeordnet (Zustandswert ZW). Dieses Berechnungsschema gilt für den Fall, daß das Halbtonzellenfeld HZF von einer einzigen Halbtonzelle periodisch aufgebaut ist. Wird hingegen das Halbtonzellenfeld HZF aus zwei verschiedenen Halbtonzellen HZ periodisch aufgebaut (Figur 7 bis 10), so ändert sich das Berechnungsschema dahingehend, daß der Bitwert "1" nur dann vergeben wird, wenn der Halbtonwert HTW echt größer als der entsprechende Schwellenwert SW ist. Entsprechend den Bitwerten "1" und "0" erfolgt ein Eintrag in das ebenfalls durch die Vektoren n, m aufgespannten, rasterförmigen Grafikformat GF. In Figur 6 ist der Bitwert "1" durch ein schwarzes Rasterfeld RF und der Bitwert "0" durch ein weißes Rasterfeld RF markiert.

Aufgrund der Periodizität der in dem Halbtonzellenfeld HZF angeordneten Halbtonzellen HZ kann der Klein-Größer-Vergleich in dem Vergleicher V mit einer einfachen Modulo-Rechenvorschrift durchgeführt werden. Mit dieser Modulo-Rechenvorschrift werden die Rasterkoordinaten n, m eines in dem Halbtonzellenfeld HZF angeordneten Zellenelementes ZE der Halbtonzelle HZ, bei dem der diesem Zellenelement ZE zugeordnete Schwellenwert SW unbekannt ist, in Spalten- und Zeilenkoordinaten x, y des Zellenelementes ZE transformiert (Koordinatentransformation), bei dem der diesem Zellenelement ZE zugeordnete Schwellenwert SW bekannt ist. Im vorliegenden Fall, wo 3x3-Halbtonzellen HZ in dem Halbtonzellenfeld HZF periodisch angeordnet sind, werden die einzelnen Zellenelemente ZE der Halbtonzelle HZ mit den dazugehörigen Schwellenwerten SW für den Vergleich des Schwellenwertes SW mit dem Halbtonwert HTW nach den Berechnungsvorschriften 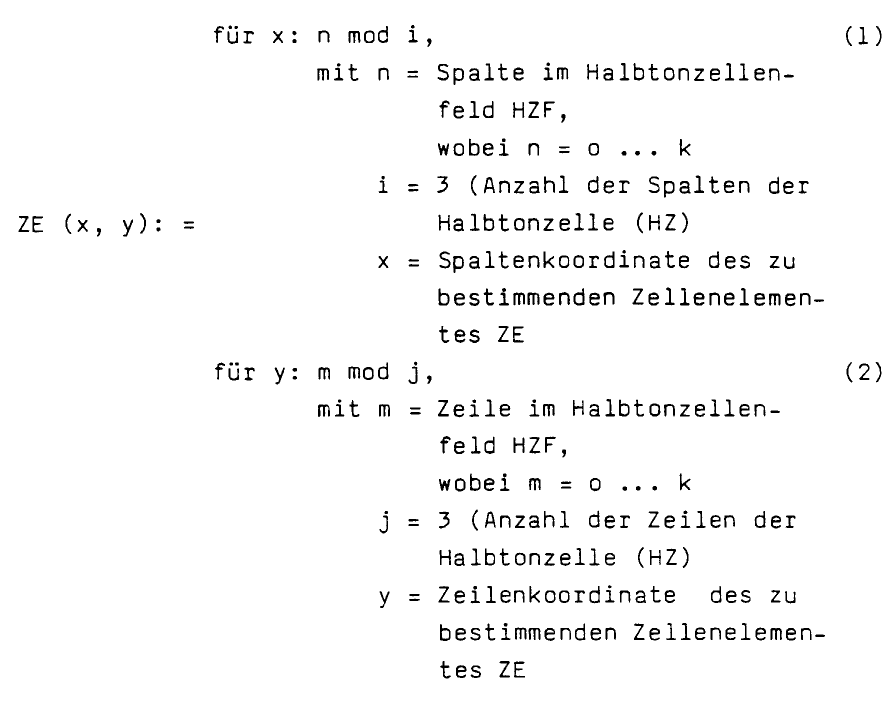 bestimmt.

### Beispiel:

Durchführen des Vergleichs zwischen dem dem Zellenelement ZE bzw. Rasterelement RE mit Rasterkoordinaten n = 241; m = 93 zugeordneten Schwellenwert SW und Halbtonwert HTW
- in dem Bildseparationsraster BSR nach Figur ist der Halbtonwert HTW des Rasterelementes RE (241, 93) z. B. HTW = "4",
- in dem Halbtonzellenfeld HZF nach Figur 6 entspricht das Zellenelement ZE (241, 93) dem nach den Berechnungsvorschriften (1); (2) koordinatentransformierten Zellenelement 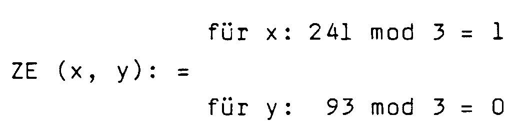
mit den Spalten- bzw. Zeilenkoordinaten x = 1, y = 0. Der zu diesem Zellenelement ZE gehörige Schwellenwert SW ist nach Figur 6 SW = "9".

Da der Halbtonwert HTW gleich "4" und der Schwellenwert SW gleich "9" ist und somit die Bedingung HTW SW nicht erfüllt ist, wird in dem Grafikformat GF (Bilevel-Bitmap) in das Rasterfeld mit den Koordinaten n = 4, m = 3 der Zustandswert (Bitwert) ZW = "0" eingetragen. In Figur 6 ist dieses Rasterfeld entsprechend der vorstehenden Konvention als weißes Rasterfeld markiert.

Figur 7 zeigt einen für den Farbausdruck (Farbauszug) "Gelb" bestimmten Halbtonzellenblock HZB, der aus einer Vielzahl von zwei verschiedenen (A, B) alternierend (schachbrettmusterartig) angeordneten 3x3-Halbtonzellen HZ aufgebaut ist. Durch die schachbrettmusterartige Anordnung der Halbtonzelle HZ (A, B) in dem Halbtonzellenblock HZB wird der Rasterwinkel von 0° bzw. 90° für den Farbausdruck "Gelb" erzeugt. Die Anordnung der Schwellenwerte SW und die Auswahl der Schwellenwertlevel (Dezimalzahlenwerte) in den Zellenelementen ZE der beiden Halbtonzellen HZ erfolgt darüber hinaus derart, daß jedes Zellenelement ZE der Halbtonzelle HZ (B) bezüglich der Schwellenwerte SW einen gegenüber der Halbtonzelle HZ (A) um den Wert "1" niedrigeren Schwellenwertlevel aufweist. Dies ist gleichbedeutend damit, daß die Halbtonzellen HZ (B) Schwellenwertlevel von 0 bis 8 und die Halbtonzelle HZ (A) Schwellenwertlevel von 1 bis 9 aufweisen. Der in Figur 7 dargestellte Halbtonzellenblock HZB wird für die Grundfarbe Y (Gelb) in das Halbtonzellenfeld HZF periodisch angeordnet. Durch die beiden Halbtonzellen HZ (A, B) sind gegenüber 10 Farbabstufungen bei einer einzigen Halbtonzelle HZ nunmehr 19 Farbabstufungen für die Grundfarbe Y möglich. Durch die alternierende Anordnung der Halbtonzellen HZ in dem Halbtonzellenblock HZB ergibt sich bei der periodischen Anordnung des Halbtonzellenblocks HZB in dem Halbtonzellenfeld HZF eine visuell nicht mehr wahrnehmbare, texturfreie Anordnung mit dem Rasterwinkel von 0° bzw. 90°.

Aufgrund der Periodizität des Halbtonzellenblocks HZB kann mit einer einfachen Modulo-Rechnung der Halbtonwert in dem Bildseparationsraster dem jeweiligen Schwellenwert in dem Halbtonzellenfeld zugeordnet werden. Die Zuordnung erfolgt dabei durch den Mikroprozessor 22, in dem die Modulo-Rechenvorschrift implementiert ist. Im vorliegenden Fall, wo der Halbtonzellenblock HZB ein quadratischer Zellenblock mit einer Blocklänge i, j von i, j = 6 pel ist, wird mit einer Modulo 6-Rechnung (mod6) jedem Halbtonwert der entsprechende Schwellenwert zugeordnet.

Diese Zuordnung mit dem sich daran anschließenden Vergleich von Schwellenwert und Halbtonwert erfolgt auf dieselbe Weise, wie in Beschreibung zur Figur 6 angegeben.

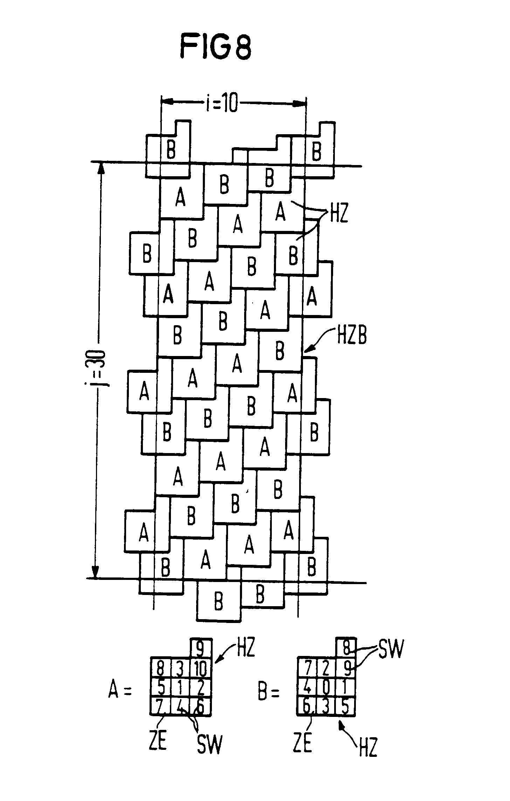

Figur 8 zeigt einen für den Farbausdruck "Magenta" bestimmten Halbtonzellenblock HZB, der aus einer Vielzahl von zwei verschiedenen (A, B) zueinander um ein Zellenelement ZE versetzt, lückenlos und alternierend bzw. gruppenweise abwechselnd angeordneten Halbtonzellen HZ mit jeweils zehn Zellenelementen ZE aufgebaut ist. Die in dem Halbtonzellenblock HZB angeordneten Halbtonzellen HZ entsprechen dabei von der äußeren Form denen in Figur 2. Durch die alternierende bzw. gruppenweise abwechselnde und versetzte Anordnung wird sowohl eine texturfreie als auch eine den Rasterwinkel von 15° erzeugende Struktur innerhalb des Halbtonzellenblocks HZB erzeugt.

Darüber hinaus erfolgt die Anordnung der Schwellenwerte SW und die Auswahl der Schwellenwertlevel (Dezimalzahlenwerte) in den Zellenelementen ZE der beiden Halbtonzellen HZ derart, daß jedes Zellenelement ZE der Halbtonzelle HZ (B) bezüglich der Schwellenwerte SW einen gegenüber der Halbtonzelle HZ (A) um den Wert "1" niedrigeren Schwellenwertlevel aufweist. Dies ist gleichbedeutend damit, daß die Halbtonzelle HZ (B) Schwellenwertlevel von 0 bis 9 und die Halbtonzelle HZ (A) Schwellenwertlevel von 1 bis 10 aufweisen. Der in Figur 8 dargestellte Halbtonzellenblock HZB wird für die Grundfarbe M (Magenta) in das Halbtonzellenfeld HZF nach Figur 4 und 6 periodisch angeordnet. Durch die beiden Halbtonzellen HZ (A, B) sind gegenüber 11 Farbabstufungen bei einer einzigen Halbtonzelle HZ nunmehr 21 Farbabstufungen für die Grundfarbe M möglich. Durch die alternierende bzw. gruppenweise abwechselnde und versetzte Anordnung der Halbtonzellen HZ (A, B) in dem Halbtonzellenblock HZB ergibt sich bei der periodischen Anordnung des Halbtonzellenblocks HZB in dem Halbtonzellenfeld HZF eine visuell nicht mehr wahrnehmbare, texturfreie Anordnung.

Aufgrund der Periodizität des Halbtonzellenblocks HZB kann wieder mit einer einfachen Modulo-Rechnung der Halbtonwert in dem Bildseparationsraster dem jeweiligen Schwellenwert in dem Halbtonzellenfeld zugeordnet werden. Diese Zuordnung erfolgt dabei wiederum durch den Mikroprozessor 22. Im vorliegenden Fall, wo der Halbtonzellenblock HZB ein rechteckförmiger Zellenblock mit einer Blocklänge i von i = 10 pel und Richtung mit einer Blocklänge j von j = 30 pel ist, wird mit einer Modulo 10-Rechnung (mod10) bzw. einer Modulo 30- Rechnung (mod30) jedem Halbtonwert der entsprechende Schwellenwert zugeordnet.

Diese Zuordnung mit dem sich daran anschließenden Vergleich von Schwellenwert und Halbtonwert erfolgt auf dieselbe Weise, wie in Beschreibung zur Figur 6 angegeben.

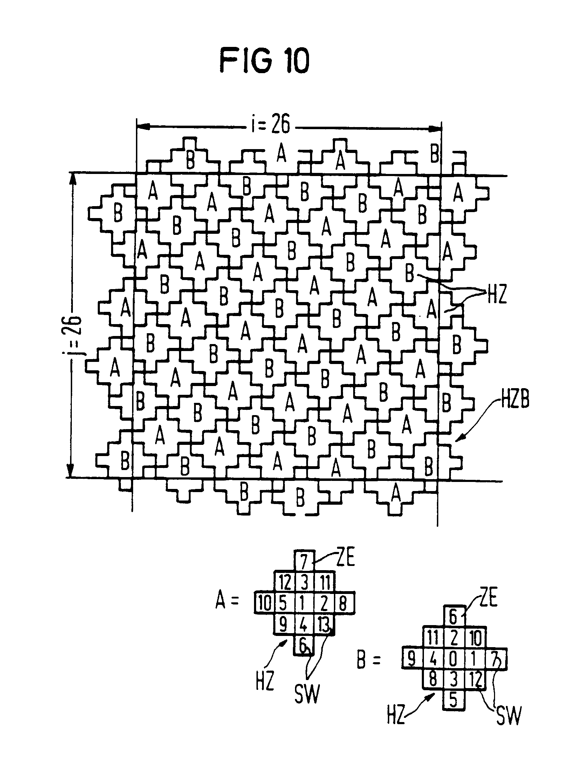

Figur 9 zeigt einen für den Farbausdruck "Cyan" bestimmten Halbtonzellenblock HZB, der wiederum aus einer Vielzahl von zwei verschiedenen (A, B) zueinander ein Zellenelement ZE versetzt, lückenlos und alternierend bzw. gruppenweise abwechselnd angeordneten Halbtonzellen HZ mit jeweils zehn Zellenelementen ZE aufgebaut ist. Die in dem Halbtonzellenblock HZB angeordneten Halbtonzellen HZ entsprechen dabei von der äußeren Form denen in Figur 3. Durch die alternierende bzw. gruppenweise abwechselnde und versetzte Anordnung wird sowohl eine texturfreie als auch den Rasterwinkel von 75° erzeugende Struktur innerhalb des Halbtonzellenblocks HZB erzeugt.

Darüber hinaus erfolgt die Anordnung der Schwellenwerte SW und die Auswahl der Schwellenwertlevel (Dezimalzahlenwerte) in den Zellenelementen ZE der beiden Halbtonzellen HZ wiederum derart, daß jedes Zellenelement ZE der Halbtonzelle HZ (B) bezüglich der Schwellenwerte SW einen gegenüber der Halbtonzelle HZ (A) um den Wert "1" niedrigeren Schwellenwertlevel aufweist. Dies ist gleichbedeutend damit, daß die Halbtonzelle HZ (B) Schwellenwertlevel von 0 bis 9 und die Halbtonzelle HZ (A) Schwellenwertlevel von 1 bis 10 aufweisen. Der in Figur 9 dargestellte Halbtonzellenblock HZB wird für die Grundfarbe C (Cyan) in das Halbtonzellenfeld HZF nach Figur 4 und 6 periodisch angeordnet. Durch die beiden Halbtonzellen HZ (A, B) sind gegenüber 11 Farbabstufungen bei einer einzigen Halbtonzelle HZ nunmehr 21 Farbabstufungen für die Grundfarbe C möglich. Durch die alternierende bzw. gruppenweise alternierende und versetzte Anordnung der Halbtonzellen HZ (A, B) in dem Halbtonzellenblock HZB ergibt sich bei der periodischen Anordnung des Halbtonzellenblocks HZB in dem Halbtonzellenfeld HZF eine visuell nicht mehr wahrnehmbare, texturfreie Anordnung.

Aufgrund der Periodizität des Halbtonzellenblocks HZB kann wieder mit einer einfachen Modulo-Rechnung der Halbtonwert in dem Bildseparationsraster dem jeweiligen Schwellenwert in dem Halbtonzellenfeld zugeordnet werden. Diese Zuordnung erfolgt dabei wiederum durch den Mikroprozessor 22. Im vorliegenden Fall, wo der Halbtonzellenblock HZB wieder ein rechteckförmiger Zellenblock mit einer Blocklänge i von i = 30 pel und mit einer Blocklänge j von j = 10 pel ist, wird mit einer Modulo 30-Rechnung (mod30) bzw. einer Modulo 10-Rechnung (modl0) jedem Halbtonwert der entsprechende Schwellenwert zugeordnet.

Diese Zuordnung mit dem sich daran anschließenden Vergleich von Schwellenwert und Halbtonwert erfolgt auf dieselbe Weise, wie in Beschreibung zur Figur 6 angegeben.

Figur 10 zeigt einen für den Farbausdruck "Schwarz" bestimmten Halbtonzellenblock HZB, der ebenfalls aus einer Vielzahl von zwei verschiedenen (A, B) in waagerechter und zueinander um zwei Zellenelemente ZE versetzt, lückenlos und alternierend angeordneten Halbtonzellen HZ mit jeweils 13 Zellenelementen ZE aufgebaut ist. Die in dem Halbtonzellenblock HZB angeordneten Halbtonzellen HZ (A, B) sind sternförmig ausgebildet, indem bei einer 3x3-Basiszelle an dessen vier mittleren Randzellenelementen ein zusätzliches Zellenelement angeordnet ist. Durch die alternierende und versetzte Anordnung wird sowohl eine texturfreie als auch den Rasterwinkel von 45° erzeugende Struktur innerhalb des Halbtonzellenblocks HZB erzeugt.

Darüber hinaus erfolgt die Anordnung der Schwellenwerte SW und die Auswahl der Schwellenwertlevel (Dezimalzahlenwerte) in den Zellenelementen ZE der beiden Halbtonzellen HZ derart, daß jedes Zellenelement ZE der Halbtonzelle HZ (B) bezüglich der Schwellenwerte SW einen gegenüber der Halbtonzelle HZ (A) um den Wert "1" niedrigeren Schwellenwertlevel aufweist. Dies ist gleichbedeutend damit, daß die Halbtonzelle HZ (B) Schwellenwertlevel von 0 bis 12 und die Halbtonzelle HZ (A) Schwellenwertlevel von 1 bis 13 aufweisen. Der in Figur 10 dargestellte Halbtonzellenblock HZB wird für die Grundfarbe K (Schwarz) in das Halbtonzellenfeld HZF nach Figur 4 und 6 periodisch angeordnet. Durch die beiden Halbtonzellen HZ (A, B) sind gegenüber 14 Farbabstufungen bei einer einzigen Halbtonzelle HZ nunmehr 27 Farbabstufungen für die Grundfarbe K möglich. Durch die alternierende Anordnung der Halbtonzellen HZ (A, B) in dem Halbtonzellenblock HZB ergibt sich bei der periodischen Anordnung des Halbtonzellenblocks HZB in dem Halbtonzellenfeld HZF eine visuell nicht mehr wahrnehmbare, texturfreie Anordnung.

Aufgrund der Periodizität des Halbtonzellenblocks HZB kann wieder mit einer einfachen Modulo-Rechnung der Halbtonwert in dem Bildseparationsraster dem jeweiligen Schwellenwert in dem Halbtonzellenfeld zugeordnet werden. Diese Zuordnung erfolgt dabei wiederum durch den Mikroprozessor 22. Im vorliegenden Fall, wo der Halbtonzellenblock HZB ein quadratischer Zellenblock mit einer Blocklänge i, j von i, j = 26 pel ist, wird mit einer Modulo 26-Rechnung (mod26) jedem Halbtonwert der entsprechende Schwellenwert zugeordnet.

Diese Zuordnung mit dem sich daran anschließenden Vergleich von Schwellenwert und Halbtonwert erfolgt auf dieselbe Weise, wie in Beschreibung zur Figur 6 angegeben.

## Patentansprüche

1. Verfahren zur Erzeugung von Rasterwinkeln in der digitalen Drucktechnik mit folgenden Verfahrensschritten:
a) Pixel einer Bildvorlage (BV) mit unterschiedlichen Halbtönen werden für Farbauszüge (Y, M, C, K) in digital codierte Halbtonwerte (HTW) separiert (Farbseparation),
b) die Halbtonwerte (HTW) werden für jeden Farbauszug (Y, M, C, K) mit Hilfe von in einer nxm-Rasterebene (HZF) periodisch angeordneten Halbtonzellen (HZ) konvertiert, indem jeder Halbtonwert (HTW), dem in bezug auf seine Rasterkoordinaten ein entsprechend vorgegebenes Zellenelement (ZE) der Halbtonzellen (HZ) zugeordnet ist, mit einem diesem Zellenelement (ZE) zugeordneten Schwellenwert (SW) in einem Klein-Größer-Vergleich verglichen wird,
c) in Abhängigkeit dieses Vergleichsergebnisses werden für jeden Farbauszug (Y, M, C, K) binäre Zustandswerte (ZW) in einem Grafikformat (GF) zwischengespeichert,
d) eine Vielzahl von zwei jeweils die gleiche Anzahl von Zellenelementen (ZE) aufweisende, von der äußeren Form den zu erzeugenden Rasterwinkel berücksichtigende Halbtonzellen (HZ), die sich bezüglich der den Zellenelementen (ZE) zugeordneten Schwellenwerten (SW) jeweils um einen Schwellenwertlevel unterscheiden, wobei die Anzahl der den Zellenelementen (ZE) der zwei Halbtonzellen (HZ) zugeordneten Schwellenwerte um den Wert "1" größer als die Anzahl der Zellenelemente (ZE) der Halbtonzelle (HZ) ist, wird für jeden Farbauszug (Y, M, C, K) in einem übergeordneten, in der nxm-Rasterebene (HZF) periodisch angeordneten Halbtonzellenblock (HZB) mit i Zellenelementspalten und j Zellenelementzeilen nach einem auf den zu erzeugenden Rasterwinkel und auf eine bezüglich einer auf dem jeweiligen Farbauszug visuell wahrnehmbaren Farbstörung störungsfreie nxm-Rasterebene (HZF) ausgerichteten Ordnungsprinzip lückenlos zueinander angeordnet.

2. Verfahren nach Anspruch 1, **dadurch gekennzeichnet,** daß die Halbtonzellen (HZ) in dem Halbtonzellenblock (HZB) alternierend angeordnet werden.

3. Verfahren nach Anspruch 1, **dadurch gekennzeichnet,** daß die Halbtonzellen (HZ) in dem Halbtonzellenblock (HZB) gruppenweise alternierend angeordnet werden.

4. Verfahren nach Anspruch 3, **dadurch gekennzeichnet,** daß die Halbtonzellen (HZ) in dem Halbtonzellenblock (HZB) zueinander um mindestens ein Zellenelement (ZE) versetzt angeordnet werden.

5. Verfahren nach einem der Ansprüche 1 bis 4, **dadurch gekennzeichnet,** daß für den Klein-Größer-Vergleich mit den Halbtonwerten (HTW) die entsprechenden Schwellenwerte (SW) mit Hilfe einer Modulo-Rechnung (mod i, j) aus dem in der nxm-Rasterebene (HZF) periodisch angeordneten Halbtonzellenblock (HZB) ermittelt werden.

6. Anordnung zur Durchführung des Verfahrens nach einem der Ansprüche 1 bis 5,
**gekennzeichnet durch**
a) Separationsmittel (8, 9), die die Pixel der Bildvorlage (BV) mit den unterschiedlichen Halbtönen in die digital codierten Halbtonwerte (HTW) separieren,
b) ein Steuerungssystem (2) zur Konvertierung der separierten Halbtonwerte (HTW) mit
b1) ersten Speichermitteln (23), in den die für jeden Farbauszug (Y, M, C, K) zugeordneten nxm-Rasterebenen (HZF) gespeichert sind,
b2) einer Steuereinrichtung (22, V), die zur Durchführung des Klein-Größer-Vergleichs mit den ersten Speichermitteln (23) und den Separationsmitteln (8, 9) gekoppelt ist,
b3) zweiten Speichermitteln (24), die mit der Steuereinrichtung (22, V) gekoppelt sind und in denen in Abhängigkeit des Vergleichergebnisses die binären Zustandswerte (ZW) zwischengespeichert sind.

7. Anordnung nach Anspruch 6, **dadurch gekennzeichnet,** daß die Steuereinrichtung (22, V) einen Mikroprozessor (22) aufweist, in dem die Modulo-Rechenvorschrift implementiert ist.

8. Anordnung nach Anspruch 6 oder Anspruch 7, **dadurch gekennzeichnet,** daß die Steuereinrichtung (22, V) für den Klein-Größer-Vergleich einen Vergleicher (V) aufweist.

9. Anordnung nach Anspruch 8, **dadurch gekennzeichnet,** daß der Vergleicher (V) als Hardware-Baustein ausgebildet ist.

10. Anordnung nach Anspruch 8, **dadurch gekennzeichnet,** daß der Vergleicher (V) in dem Mikroprozessor (22) als Programm realisiert ist.

11. Anordnung nach einem der Ansprüche 6 bis 10, **dadurch gekennzeichnet,** daß das Steuerungssystem (2) in einer Druckeinrichtung (1) angeordnet ist.

12. Anordnung nach Anspruch 11, **dadurch gekennzeichnet,** daß die Separationsmittel (8, 9) der Druckeinrichtung (1) zugeordnet sind.

## Claims

1. Process for producing screen angles in digital printing having the following process steps:
a) pixels of an original (BV) with different half-tones are separated for colour separations (Y, M, C, K) into digitally coded half-tone values (HTW),
b) the half-tone values (HTW) are converted for each colour separation (Y, M, C, K) with the aid of half-tone cells (HZ) arranged periodically into an nxm screen plane (HZF) by each half-tone value (HTW), to which there is assigned with respect to its screen coordinates a correspondingly predetermined cell element (ZE) of the half-tone cells (HZ), being compared in a lesser/greater comparison with a threshold value (SW) assigned to this cell element (ZE),
c) in dependence on the result of this comparison, for each colour separation (Y, M, C, K) binary status values (ZW) are stored intermediately in a graphic format (GF),
d) a plurality of two half-tone cells (HZ), which each have the same number of cell elements (ZE), from the outer form take account of the screen angle to be produced and in each case differ by one threshold value level with respect to the threshold values (SW) assigned to the cell elements (ZE), the number of threshold values assigned to the cell elements (ZE) of the two half-tone cells (HZ) being greater by the value "1" than the number of cell elements (ZE) of the half-tone cell (HZ), are arranged for each colour separation (Y, M, C, K) continuously with respect to one another in a higher-order, half-tone cell block (HZB) periodically arranged in the nxm screen plane (HZF) and having i cell element columns and j cell element rows in accordance with an order principle based on the screen angle to be produced and on a disturbance-free nxm screen plane (HZF) which is free of any visually perceptible disturbance in colour on the particular colour separation.

2. Process according to Claim 1, characterized in that the half-tone cells (HZ) are arranged alternatingly in the half-tone cell block (HZB).

3. Process according to Claim 1, characterized in that the half-tone cells (HZ) are arranged alternatingly grouped in the half-tone cell block (HZB).

4. Process according to Claim 3, characterized in that the half-tone cells (HZ) are arranged offset with respect to one another by at least one cell element (ZE) in the half-tone cell block (HZB).

5. Process according to one of Claims 1 to 4, characterized in that, for the lesser/greater comparison with the half-tone values (HTW), the corresponding threshold values (SW) are determined with the aid of a modulo calculation (mod i, j) from the half-tone cell block (HZB) periodically arranged in the nxm screen plane (HZF).

6. Arrangement for carrying out the process according to one of Claims 1 to 5, characterized by
a) separation means (8, 9) which separate the pixels of the original (BV) with the different half-tones into the digitally coded half-tone values (HTW),
b) a control system (2) for the conversion of the separated half-tone values (HTW) having
b1) first storage means (23), in which the nxm screen planes (HZF) assigned for each colour separation (Y, M, C, K) are stored,
b2) a control device (22, V), which for carrying out the lesser/greater comparison is coupled to the first storage means (23) and the separation means (8, 9),
b3) second storage means (24), which are coupled to the control device (22, V) and in which the binary status values (ZW) are intermediately stored in dependence on the result of the comparison.

7. Arrangement according to Claim 6, characterized in that the control device (22, V) has a microprocessor (22), in which the modulo calculation specification is implemented.

8. Arrangement according to Claim 6 or Claim 7, characterized in that the control device (22, V) has for the lesser/greater comparison a comparator (V).

9. Arrangement according to Claim 8, characterized in that the comparator (V) is designed as a hardware module.

10. Arrangement according to Claim 8, characterized in that the comparator (V) is realized in the microprocessor (22) as a program.

11. Arrangement according to one of Claims 6 to 10, characterized in that the control system (2) is arranged in a printing device (1).

12. Arrangement according to Claim 11, characterized in that the separation means (8, 9) are assigned to the printing device (1).

## Revendications

1. Procédé de production d'angles de trame en technique d'impression numérique, comprenant les étapes de procédé suivantes :
a) les pixels d'un original image (BV) possédant différentes tonalités sont soumis à une sélection pour obtenir des composantes de sélection chromatique (Y, M, C, K) en valeurs de ton codées en numérique (HTW) (sélection chromatique),
b) pour chaque composante de sélection chromatique (Y, M, C, K), les valeurs de ton (HTW) sont converties, à l'aide de cellules de tonalité (HZ) disposées selon une loi périodique dans un plan de trame nxm (HZF), par le fait que chaque valeur de ton (HTW), à laquelle est associé, en rapport avec ses coordonnées de trame, un élément de cellule (ZE) prédéterminé en conséquence appartenant aux cellules de tonalité (HZ), est comparée à une valeur de seuil (SW) associée à cet élément de cellule (ZE) dans une comparaison petit-plus grand,
c) pour chaque composante de sélection chromatique (Y, M, C, K) et en fonction de ce résultat de comparaison, des valeurs d'état binaires (ZW) sont mémorisées temporairement dans un format graphique (GF),
d) pour chaque composante de sélection chromatique (Y,M,C,K), une pluralité de paires de cellules de tonalité (HZ) qui présentent chacune le même nombre d'éléments de cellule (ZE), qui tiennent compte de la forme extérieure en fonction de l'angle de trame à produire, et qui, en ce qui concerne les valeurs de seuil (SW) associées aux éléments de cellule (ZE), diffèrent les unes des autres d'un niveau de valeur de seuil, le nombre des valeurs de seuil associées aux éléments de cellule (ZE) des deux cellules de tonalité (HZ) étant supérieur de "1" au nombre des éléments de cellules (ZE) de la cellule de tonalité (HZ), sont disposées dans un bloc de cellules de tonalité (HZB) d'un ordre supérieur agencé selon une loi périodique dans le plan de trame nxm (HZF) et possèdant i colonnes d'éléments de cellules et j lignes d'éléments de cellules, sans espacement mutuel et selon un principe d'ordre orienté sur l'angle de trame à produire et sur un plan de trame nxm (HZF) dépourvu de défaut relativement à un défaut de couleur qui pourrait être perçu visuellement sur la composante de sélection chromatique correspondante.

2. Procédé selon la revendication 1, caractérisé en ce que les cellules de tonalité (HZ) sont disposées en alternance dans le bloc de cellules de tonalité (HZB).

3. Procédé selon la revendication 1, caractérisé en ce que, dans le bloc de cellules de tonalité (HZB), les cellules de tonalité sont disposées en alternance par groupes.

4. Procédé selon la revendication 3, caractérisé en ce que, dans le bloc de cellules de tonalité, les cellules de tonalité (HZ) sont disposées avec décalage mutuel d'au moins un élément de cellule (ZE).

5. Procédé selon une des revendications 1 à 4, caractérisé en ce que, pour la comparaison petit-plus grand, avec les valeurs de ton (HTW), les valeurs de seuil correspondantes (SW) sont extraites à l'aide d'un calcul modulo (mode i, j) à partir du bloc de cellules de tonalité (HZB) disposé selon une loi périodique dans le plan de trame nxm (HZF).

6. Dispositif pour la mise en oeuvre du procédé selon une des revendications 1 à 5,
caractérisé par :
a) des moyens de sélection (8, 9) qui sélectionnent les pixels de l'original image (BV) possédant différentes tonalités en des valeurs de ton codées en numérique (HTW),
b) un système de commande (2) destiné à convertir les valeurs de ton sélectionnées (HTW), et qui comprend
b1) des premiers moyens de mémoire (23) dans lesquels sont mémorisés les plans de trame nxm (HZF) associés à chaque composante de sélection chromatique (Y, M, C, K),
b2) un dispositif de commande (22, V) qui est couplé aux premiers moyens de mémoire (23) et aux moyens de sélection (8,9) pour l'exécution de la comparaison petit-plus grand,
b3) des deuxièmes moyens de mémoire (24) qui sont couplés au dispositif de commande (22, V) et dans lesquels les valeurs d'état binaires (ZW) sont mémorisées temporairement en fonction du résultat de la comparaison.

7. Dispositif selon la revendication 6, caractérisé en ce que le dispositif de commande (22, V) comprend un microprocesseur (22) dans lequel l'ordre de calcul modulo est exécuté.

8. Dispositif selon la revendication 6 ou la revendication 7, caractérisé en ce que le dispositif de commande (22, V) comprend un comparateur (V) pour l'exécution de la comparaison petit-plus grand.

9. Dispositif selon la revendication 8, caractérisé en ce que le comparateur (V) est réalisé sous la forme d'un composant matériel.

10. Dispositif selon la revendication 8, caractérisé en ce que le comparateur (V) est réalisé dans le microprocesseur (22) sous la forme d'un programme.

11. Dispositif selon une des revendications 6 à 10, caractérisé en ce que le système de commande (2) est agencé dans un dispositif d'impression (1).

12. Dispositif selon la revendication 11, caractérisé en ce que les moyens de sélection (8, 9) sont associés au dispositif d'impression (1).
